(19) Europäisches Patentamt
European Patent Office
Office européen des brevets

(11) **EP 4 524 829 A1**

(12) **EUROPEAN PATENT APPLICATION**

(43) Date of publication:
**19.03.2025 Bulletin 2025/12**

(21) Application number: **23382925.8**

(22) Date of filing: **12.09.2023**

(51) International Patent Classification (IPC):
**G06N 10/60** (2022.01)   **G06N 20/20** (2019.01)
**G06F 21/55** (2013.01)

(52) Cooperative Patent Classification (CPC):
**G06N 10/60; G06F 21/554; G06N 20/20**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Multiverse Computing S.L.**
**20009 Donostia (ES)**

(72) Inventors:
• **AIZPURUA, Borja**
  **20009 Donostia (ES)**
• **BERMEJO, Pablo**
  **20009 Donostia (ES)**
• **ORÚS, Román**
  **20009 Donostia (ES)**

(74) Representative: **Balder IP Law, S.L.**
**Paseo de la Castellana 93**
**5ạ planta**
**28046 Madrid (ES)**

(54) **METHOD FOR ADJUSTING A BOOSTED CLASSIFIER, BOOSTED CLASSIFIER AND DEVICE OR SYSTEM FOR PERFORMING THE METHOD**

(57)     The invention relates to a method (100) comprising:

adjusting (103) weight values of a boosted classifier, the boosted classifier being a classifier for calculating whether data is indicative of an intrusion;

the boosted classifier comprising the weight values and a plurality of classifiers, each classifier of the plurality of classifiers being associated with a weight value of the weight values;

the step of adjusting (103) the weight values comprising adjusting (1031), by at least one quantum computing device, states of qubits for reducing a value of a cost function of the boosted classifier;

wherein the adjusted weight values are based on the adjusted states of qubits.

The invention also relates to a device or system for performing the method, to the boosted classifier and to execution of the boosted classifier.

**EP 4 524 829 A1**

## Description

## TECHNICAL FIELD

The present invention is encompassed within the field of detection of intrusion.

## BACKGROUND

Intrusion detection systems monitor computing entities (for example, computing devices, computing systems or networks of computing devices) for detecting intrusion into the monitored resource (e.g., violation of security of the monitored resource, malicious activity within the monitored resource and/or misuse of the monitored resource).

There are two primary types of intrusion detection: network-based intrusion detection and host-based intrusion detection. Network-based intrusion detection monitors traffic of the network for detecting malicious activity within the network. Host-based intrusion detection monitors individual hosts or servers for detecting unauthorized access to the respective host or server and/or unauthorized activity within the respective host or server.

There are already a variety of techniques for detecting intrusion. For example, signature-based detection, which looks for known patterns of malicious activity; and behavior-based detection, which looks for unusual or suspicious activity. It is also known that intrusion detection may benefit from artificial intelligence algorithms (e.g., machine learning) to detect new or evolving types of intrusion.

Although several techniques of detection of intrusion already known in the art perform relatively well, it is desirable to further improve performance of detection of intrusion.

## SUMMARY

A first aspect of the disclosure relates to a method comprising:

> adjusting weight values of a boosted classifier, the boosted classifier being a classifier for calculating whether data is indicative of an intrusion into a computing entity;
> the boosted classifier comprising the weight values and a plurality of classifiers, each classifier of the plurality of classifiers being associated with a weight value of the weight values;
> the step of adjusting the weight values comprising adjusting, by at least one quantum computing device, states of qubits for reducing a value of a cost function of the boosted classifier;

wherein the adjusted weight values are based on the adjusted states of qubits.

The performance of classification by the boosted classifier, as measured with the cost function, is enhanced by carrying out the method of the first aspect of the disclosure. It has been shown that training boosted classifiers by adjusting the weight values thereof by adjusting, by at least one quantum computing device, states of qubits allows increasing performance of detection of intrusion by the boosted classifier trained in this manner. For example, it has been shown that training a boosted classifier in this manner allows obtaining a trained boosted classifier capable of detecting a higher proportion of intrusions than state-of-the-art techniques relying merely on classical machine learning. An example in which the boosted classifier of the first aspect of the disclosure has higher performance of classification than known state-of-the-art techniques is in classification of the Intrusion Detection Evaluation Dataset (CIC-IDS2017).

By adjusting weight values of the boosted classifier, it can be obtained a boosted classifier having better performance of classification than any individual classifier of the plurality of classifiers.

In some embodiments, the method comprises: training each classifier of the plurality of classifiers before performing the step of adjusting the weight values.

Training each classifier of the plurality of classifiers allows increasing individual performance of each classifier of the plurality of classifiers, which allows increasing performance of the boosted classifier.

In some embodiments, at least one classifier of the plurality of classifiers is trained separately from the rest of classifiers of the plurality of classifiers. Training a classifier separately from the rest of classifiers allows relatively simpler and quicker training (compared to training a classifier of the plurality of classifier considering at least another classifier of the plurality of classifiers), while allowing obtaining a boosted classifier having a relatively high performance of classification (i.e., detecting a higher proportion of intrusions).

In some embodiments, for allowing further simplicity and quickness of training (while allowing obtaining a boosted classifier having a relatively high performance of classification), all the classifiers of the plurality of classifiers are trained separately from the rest of classifiers of the plurality of classifiers.

In some embodiments, each classifier of the plurality of classifiers is a classifier for calculating whether data is indicative of an intrusion into a computing entity.

In some embodiments, each adjusted weight value of the adjusted weight values is associated with several qubits; and each value of the adjusted weight values is encoded in the qubits associated with the respective adjusted weight value. Encoding each weight value in several qubits allows increasing a total number of values that the respective weight value may take (in comparison with encoding each weight value in just one qubit), hence allowing a finer adjustment of the weight values when performing the method of the first aspect of the disclosure, which allows enhancing performance of classification by the boosted classifier.

In some embodiments, the adjustment of the states of qubits is based on training data, the training data comprising sets of input data; each set of input data of the sets of input data being associated with output data indicative of whether the respective set of input data is indicative of an intrusion into a computing entity; each set of the sets of input data comprising at least one of: data indicative of a standard deviation of lengths of packets, data indicative of a total length of backward packets (i.e., packets in backward direction; in other words, packets that go from the receiver to the sender), data indicative of bytes of a backward subflow (i.e., data indicative of bytes received in a particular time range, the bytes going from the receiver to the sender), data indicative of a destination port of packets and data indicative of a variance of lengths of packets. It has been shown that using these features for adjusting the weight values allows achieving a boosted classifier having particularly high performance of classification. Preferably, for allowing achieving a relatively higher performance each set of the sets of input data comprises: data indicative of a standard deviation of lengths of packets, data indicative of a total length of backward packets, data indicative of bytes of a backward subflow, data indicative of a destination port of packets and data indicative of a variance of lengths of packets.

In some embodiments, the adjustment of the states of qubits is based on training data, the training data comprising sets of input data; each set of input data of the sets of input data being associated with output data indicative of whether the respective set of input data is indicative of an intrusion into a computing entity; each set of the sets of input data comprising at least one of: data indicative of an identification of a subentity within the computing entity, data indicative of an identification of a category of an event, data indicative of an identification of a campaign (i.e., data indicative of a context of the set of input data, such as, media or marketing), data indicative of a name of a campaign, data indicative of a name of a host, data indicative of an ip address of a host, data indicative of an event, data indicative of a path of a process, data indicative of a name of a working directory of a process and data indicative of a name of a user running a process. It has been shown that using these features for adjusting the weight values allows achieving a boosted classifier having particularly high performance. Preferably, for allowing achieving a relatively higher performance each set of the sets of input data comprises: data indicative of an identification of a subentity within the computing entity, data indicative of an identification of a category of an event, data indicative of an identification of a campaign, data indicative of a name of a campaign, data indicative of a name of a host, data indicative of an ip address of a host, data indicative of an event, data indicative of a path of a process, data indicative of a name of a working directory of a process, data indicative of a name of a user running a process.

In some embodiments, the cost function at least comprises an error function with the error of A relative to B, where:

A is $F(\vec{x_j}) = \sum_i \alpha_i f_i(\vec{x_j})$, where $\vec{x_j}$ is a j-th set of data of a plurality of sets of input data; $f_i(\vec{x_j})$ is a classification, performed by the i-th classifier of the plurality of classifiers, of the j-th set of data of the plurality of sets of input data; and $\alpha_i$ is the weight value associated with the i-th classifier;

B is an actual class of the j-th set of data of the plurality of sets of input data; and

the error function being for all sets of data of the plurality of sets of input data or some sets of data of the plurality of sets of input data.

In some embodiments, the method comprises:

computing a value of the cost function for the adjusted weight values,

determining whether the computed value of the cost function fulfills a criterion of convergence of the cost function, and

if the computed value of the cost function does not fulfill the criterion of convergence of the cost function, further performing the steps of:

adjusting the weight values by adjusting, by at least one quantum computing device, states of qubits for reducing a value of the cost function, thereby obtaining further adjusted weight values;

computing a value of the cost function for the further adjusted weight values, thereby obtaining a further computed value of the cost function; and

determining whether the further computed value of the cost function fulfills the criterion of convergence of the cost function;

if the computed value of the cost function fulfills the criterion of convergence of the cost function, not performing the step of adjusting the weight values.

Thereby, the adjustment of the weight values may be iteratively performed until a value of the cost function for adjusted weight values fulfills the criterion of convergence. The criterion of convergence may comprise comparing a value of a cost function for adjusted weight values with a value of a cost function for adjusted weight values previously obtained. For example, the criterion of convergence may comprise calculating whether an absolute value of a difference between the value of a cost function for adjusted weight values and the value of a cost function for adjusted weight values previously obtained is lower than a threshold, and determining that the convergence criterion has been met upon calculating that the absolute value is lower than a threshold.

In some embodiments, the method comprises:

computing a parameter related to the value of the cost function for the adjusted weight values,
determining whether the computed parameter related to the value of the cost function fulfills a criterion of convergence of the cost function, and
if the computed parameter does not fulfill the criterion of convergence of the cost function, further performing the steps of:

adjusting the weight values by adjusting, by at least one quantum computing device, states of qubits for reducing a value of the cost function, thereby obtaining further adjusted weight values;
computing a parameter related to the value of the cost function for the further adjusted weight values, thereby obtaining a further computed parameter related to the value of the cost function; and
determining whether the further computed parameter related to the value of the cost function fulfills the criterion of convergence of the cost function;

if the computed parameter related to the value of the cost function fulfills the criterion of convergence of the cost function, not performing the step of adjusting the weight values.

Thereby, the adjustment of the weight values may be iteratively performed until a parameter related to the value of the cost function for adjusted weight values fulfills the criterion of convergence. The criterion of convergence may comprise comparing a parameter related to the value of the cost function for adjusted weight values with a parameter related to the value of the cost function for adjusted weight values previously obtained.

In some embodiments, the computation of a value of the cost function (or the computation of a parameter related to the value of the cost function) is performed digitally. Performing the computation of a value of the cost function digitally allows not using a quantum computing device for performing said computation, thereby enabling the use of the quantum computer device in a task in which quantum computing may be relatively more advantageous, for example, the adjustment of states of qubits for adjusting the weight values.

In some embodiments, the boosted classifier is a classifier for calculating whether data is indicative of an intrusion into a network of computing devices; and the adjustment of the states of qubits is based on training data, the training data comprising sets of input data; each set of input data of the sets of input data being associated with output data indicative of whether the respective set of input data is indicative of an intrusion into a network of computing devices; the sets of input data comprising data of a network of computing devices. The boosted classifier may be a classifier for calculating whether data is indicative of an intrusion into a first network of computing devices, and the sets of input data may comprise data of a second network of computing devices.

In some embodiments, the boosted classifier may be a classifier for calculating whether data is indicative of an intrusion into a first network of computing devices, and the sets of input data may comprise data of the first network of computing devices. Thereby, the adjustment of the weight coefficients may be enhanced since the boosted classifier is trained with data from the network in which the boosted classifier detects intrusions.

In some embodiments, the boosted classifier is a classifier for calculating whether data is indicative of an intrusion into a computing device; and the adjustment of the states of qubits is based on training data, the training data comprising sets of input data; each set of input data of the sets of input data being associated with output data indicative of whether the respective set of input data is indicative of an intrusion into a computing device; the sets of input data comprising data of a computing device. The boosted classifier may be a classifier for calculating whether data is indicative of an intrusion into a first computing device, and the sets of input data may comprise data of a second computing device.

In some embodiments, the boosted classifier may be a classifier for calculating whether data is indicative of an intrusion into a first computing device, and the sets of input data may comprise data of the first computing device. Thereby, the adjustment of the weight coefficients may be enhanced since the boosted classifier is trained with data of the computing device in which the boosted classifier detects intrusions.

In some embodiments, the boosted classifier is a classifier for calculating whether data is indicative of an intrusion into a computing system; and the adjustment of the states of qubits is based on training data, the training data comprising sets of input data; each set of input data of the sets of input data being associated with output data indicative of whether the respective set of input data is indicative of an intrusion into a computing system; the sets of input data comprising data of a computing system. The boosted classifier may be a classifier for calculating whether data is indicative of an intrusion into a first computing system, and the sets of input data may comprise data of a second computing system.

In some embodiments, the boosted classifier may be a classifier for calculating whether data is indicative of an intrusion into a first computing system, and the sets of input data may comprise data of the first computing system. Thereby, the adjustment of the weight coefficients may be enhanced since the boosted classifier is trained with data of the computing system in which the boosted classifier detects intrusions.

A second aspect of the disclosure relates to a boosted classifier comprising weight values and a plurality of classifiers, each classifier of the plurality of classifiers being associated with a weight value of the weight values, wherein the weight values have been adjusted by performing the method of the first aspect of the disclosure.

In some embodiments, the boosted classifier is a classifier for calculating whether data is indicative of an intrusion into at least one of: a network of computing devices, a computing device and a computing system.

In some embodiments, the boosted classifier is a classifier for calculating whether data is indicative of an intrusion, wherein the intrusion involves at least one of:

unauthorized access to at least one of a network of computing devices, a computing device and a computing system, and
misuse of at least one of a network of computing devices, a computing device and a computing system.

In some embodiments, the misuse of the network of computing devices may comprise modifying a configuration of the network of computing devices, for example, modifying the network so that the network transmits packets to an unauthorized destination or modifying the network so that the network receives packets from an unauthorized sender.

A third aspect of the disclosure relates to calculating whether data is indicative of an intrusion into a computing entity by digitally executing the boosted classifier of the second aspect of the disclosure.

In some embodiments, the adjustment of the weight values additionally comprises executing digital computations by first at least one computing device, and the boosted classifier is executed by second at least one computing device. Thereby, it is not required to stop execution of the boosted classifier by the second at least one computing device to adjust weight values of the boosted classifier. In other words, the boosted classifier may be executed by the second at least one computing device at the same time as the first at least one computing device adjusts weight values wherein the latest adjusted weight values may be subsequently sent to the second at least one computing device to update the boosted classifier to be executed by the second at least one computing device.

In some embodiments, the boosted classifier is digitally executed for calculating whether data of a network of computing devices (e.g., at least one of: data transmitted within the network, data received by a computing device of the network, data transmitted by a computing device of the network and data of configuration of the network) is indicative of an intrusion into the network of computing devices.

In some embodiments, the step of calculating whether data of a network of computing devices is indicative of an intrusion into the network of computing devices comprises classifying by the boosted classifier the data of the network so that the boosted classifier provides an output indicative of intrusion or non-intrusion.

In some embodiments, the step of calculating whether data of a network of computing devices is indicative of an intrusion into the network of computing devices comprises processing (e.g., by at least one classical computing device) the data of the network of computing devices to modify format of the data of the network and/or obtain aggregate parameters of the data of the network; the step of calculating whether data of the network of computing devices is indicative of an intrusion into the network of computing devices comprises classifying by the boosted classifier the processed data so that the boosted classifier provides an output indicative of intrusion or non-intrusion (i.e., of whether the data of the network of computing devices is indicative of an intrusion into the network of computing devices).

In some embodiments, the boosted classifier is digitally executed for calculating whether data of a computing device (e.g., at least one of: data processed by the computing device, data stored in the computing device, data received by the computing device, data sent by the computing device and data of configuration of the computing device) is indicative of an intrusion into the computing device.

In some embodiments, the step of calculating whether data of a computing device is indicative of an intrusion into the computing device comprises classifying by the boosted classifier the data of the computing device so that the boosted classifier provides an output indicative of intrusion or non-intrusion (i.e., indicative of whether the data of the computing device is indicative of an intrusion into the computing device).

In some embodiments, the step of calculating whether data of a computing device is indicative of an intrusion into the computing device comprises processing (e.g., by at least one classical computing device) the data of the computing device to modify format of the data of the computing device and/or obtain aggregate parameters of the data of the computing device; the step of calculating whether data of the computing device is indicative of an intrusion into the computing device comprises classifying by the boosted classifier the processed data so that the boosted classifier provides an output indicative of intrusion or non-intrusion (i.e., indicative of whether the data of the computing device is indicative of an intrusion into the computing device).

In some embodiments, the boosted classifier is digitally executed for calculating whether data of a computing system (e.g., at least one of: data processed by the computing system, data stored in the computing system, data received by the computing system, data sent by the computing system and data of configuration of the computing system) is indicative of an intrusion into the computing system.

In some embodiments, the step of calculating whether data of a computing system is indicative of an intrusion into the computing system comprises classifying by the boosted classifier the data of the computing system so that the boosted classifier provides an output indicative of intrusion or non-intrusion (i.e., indicative of whether the data of the computing system is indicative of an intrusion into the computing system).

In some embodiments, the step of calculating whether data of a computing system is indicative of an intrusion into the computing system comprises processing (e.g., by at least one classical computing device) the data of the computing system to modify format of the data of the computing system and/or obtain aggregate parameters of the data of the computing system; the step of calculating whether data of the computing system is indicative of an intrusion into the computing system comprises classifying by the boosted classifier the processed data so that the boosted classifier provides an output indicative of intrusion or non-intrusion (i.e., indicative of whether the data of the computing system is indicative of an intrusion into the computing system).

In some embodiments, upon calculating that data is indicative of an intrusion into a computing entity (e.g., at least one of: a network of computing devices, a computing device and a computing system), at least one of the following is performed:

- generating a signal indicative of an intrusion,
- blocking traffic of a network of computing devices, the network being associated with the data classified as indicative of an intrusion by the boosted classifier (e.g., the data is data of the network of computing devices), and
- disconnecting a computing device from a network to prevent propagation of an intrusion through the network, the computing device being associated with the data classified as indicative of an intrusion by the boosted classifier (e.g., the data is data of the computing device).

The step of generating a signal indicative of an intrusion may comprise generating a signal indicative of an intrusion into a particular computing entity (e.g., in a particular computing device, in a particular computing network or in a particular computing system). In this way, the particular computing entity subjected to the intrusion can be identified in a relatively quick manner, thereby allowing relatively quick response to the intrusion as detected by the boosted classifier.

In some embodiments, the signal indicative of an intrusion is a signal perceivable by at least one person (e.g., an alert perceivable by at least one person), the signal enabling that the at least one person perceives that the boosted classifier has classified data as indicative of an intrusion. The at least one person may respond to the signal indicative of an intrusion, for example, by checking whether the alert is a false positive and/or by actuating the computing entity subjected to the intrusion for minimizing a negative impact that may be caused (in at least one of: a direct and an indirect manner) by the intrusion as detected by the boosted classifier in the computing entity subjected to the detected intrusion.

In some embodiments, the signal indicative of an intrusion may be received by at least one computing device, the at least one computing device being configured to respond to the signal by executing (by the at least one computing device) instructions, particularly, instructions for minimizing a negative impact that may be caused (in at least one of: a direct and an indirect manner) by the intrusion as detected by the boosted classifier in the computing entity subjected to the detected intrusion. For example, the instructions may be for: disconnecting a computing device subjected to the intrusion from a network to prevent that the intrusion propagates through the network, blocking packets sent from the computing entity subjected to the detected intrusion to a particular computing entity (e.g., to a particular IP address), blocking packets sent from a particular computing entity (e.g., a particular IP address) and received by the computing entity subjected to the detected intrusion.

By blocking traffic of a network, a negative impact of an intrusion into the network may be minimized. For example, intrusion into several nodes of the network of computing devices may be detected, and transmission of data to and/or reception of data from said nodes may be blocked to make it more difficult intruding into other nodes of the network.

By isolating a computing device from a network it is prevented that an intrusion to which the computing device is subjected propagates through the network.

A fourth aspect of the disclosure relates to a computing system or to at least one computing device comprising means for carrying out the steps of the method of the first aspect of the disclosure.

Additional advantages and features of the invention will become apparent from the detailed description that follows and will be particularly pointed out in the appended claims.

**BRIEF DESCRIPTION OF THE DRAWINGS**

To complete the description and to provide for a better understanding of the disclosure, a set of drawings is provided. Said drawings form an integral part of the description and illustrate embodiments of the disclosure, which should not be interpreted as restricting the scope of the disclosure, but just as examples of how the disclosure can be carried out. The drawings comprise the following figures:

Figure 1 diagrammatically shows a method in accordance with embodiments.
Figure 2 diagrammatically shows a system in accordance with embodiments.

## DETAILED DESCRIPTION

The following description is not to be taken in a limiting sense but is given solely for the purpose of describing the broad principles of the disclosure. Embodiments of the disclosure will be described by way of example, with reference to the above-mentioned drawings.

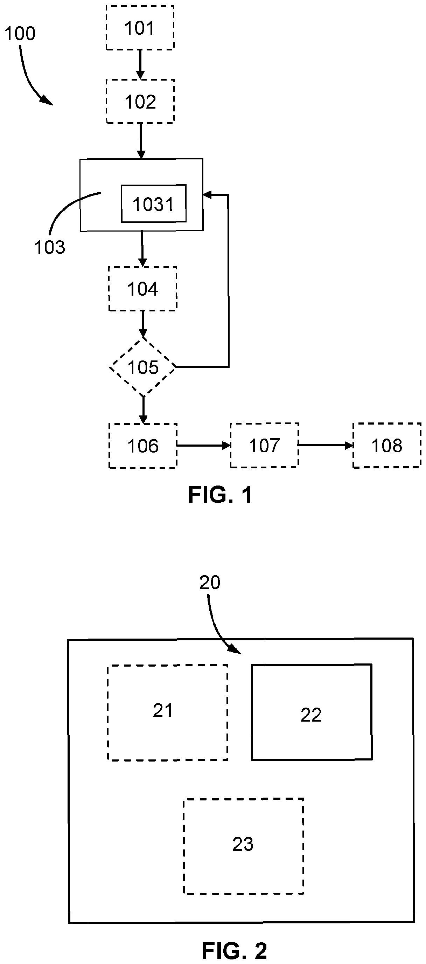

Figure 1 shows a method 100 according to the present disclosure. Figure 2 shows a computing system 20. Methods according to the present disclosure may be carried out, for example, by the system 20.

The system 20 may comprise at least one classical computing device 21. The at least one classical computing device 21 (i.e., at least one digital computing device) may be, for example, a CPU, a GPU, an FPGA, an ASIC, a personal computer, a laptop, etc. The system 20 comprises at least one quantum computing device 22. The system 20 comprises at least one memory 23, the at least one memory 23 may be part of the at least one classical computing device 21.

The method 100 is an example of a method comprising adjusting weight values of a boosted classifier by adjusting, by at least one quantum computing device, states of qubits.

The boosted classifier is a classifier for calculating whether data is indicative of an intrusion, in particular, whether data is indicative of an intrusion into a computing entity, for example, in at least one of: a network of computing devices, a computing device and a computing system. Thereby the boosted classifier is a classifier for classifying data in at least two classes: data indicative of an intrusion and data which is not indicative of an intrusion.

The boosted classifier may be, for example, the following weighed combination of the plurality of classifiers:

$$F\left(\overrightarrow{x_J}\right) = \sum_i \alpha_i f_i\left(\overrightarrow{x_J}\right)$$

wherein:

$\overline{x_J}$ is a vector containing input data (e.g., data associated with at least one of: a network of computing devices, a computing device and a computing system),

$F(\overline{x_J})$ is a classification, calculated by the boosted classifier, of $\overline{x_J}$,

$\alpha_i$ is a weight value associated with the i-th classifier of the plurality of classifiers, and

$f_i(\overline{x_J})$ is a classification, calculated with the i-th classifier of the plurality of classifiers, of $\overline{x_J}$.

Each classifier of the plurality of classifiers may be a classifier for calculating whether data is indicative of an intrusion.

The adjusted weight values may be stored as a string of bits mapped to the adjusted states of qubits.

In a first step of the method 100 (the first step being optional), the plurality of classifiers may be trained 101. Thereby, a plurality of trained classifiers is obtained.

At least one classifier of the plurality of classifiers may be trained separately from the remaining classifier(s) of the plurality of classifiers, so that the training of the at least one classifier of the plurality of classifiers is not affected by any other classifier of the plurality of classifiers.

At least one classifier of the plurality of classifiers may be trained, for example, by digital computing (for example, by the at least one classical computing device 21). At least one classifier of the plurality of classifiers may be trained, for example, by quantum computing (for example, by the at least one quantum computing device 22).

Each classifier of the plurality of classifiers may be, for example, a model of supervised machine learning based on a decision tree. Each classifier of the plurality of classifiers may be, for example, one of: a random forest classifier, an adaboost classifier and an xgbclassifier. For example, at least one classifier of the plurality of classifiers is a random forest classifier, at least one classifier of the plurality of classifiers is an adaboost classifier and at least one classifier of the plurality of classifiers is an xgbclassifier.

The training data used for training the plurality of classifiers may comprise a plurality of sets of input data and a plurality of sets of output data, wherein:

each set of the plurality of sets of input data comprises, for example: data indicative of a standard deviation of lengths of packets, data indicative of a total length of backward packets, data indicative of bytes of a backward subflow, data indicative of a destination port of packets and data indicative of a variance of lengths of packets;

each set of the plurality of sets of output data is associated with a set of the plurality of sets of input data; and

each set of output data of the plurality of sets of output data comprises data indicative of whether the set of the plurality of sets of input data associated with the respective set of output data is indicative of an intrusion.

In some embodiments, at least one classifier of the plurality of classifiers may be trained by using less categories of data of the plurality of sets of input data than the total number of categories of data of the plurality of sets of input data. For example, each set of the plurality of sets of input data may comprise a first category of data indicative of a standard deviation of length of packets, a second category of data indicative of a total length of backward packets and a third category of data indicative of bytes of a backward subflow; a first classifier of the plurality of classifiers may be trained by using data of the first category of the plurality of sets of input data and not using data of the second category nor data of the third category of the plurality of sets of input data, and a second classifier of the plurality of classifiers may be trained by using data of the second category of the plurality of sets of input data and not using data of the first category nor data of the third category of the plurality of sets of input data.

In a second step of the method 100 (the second step being optional), a cost function of the boosted classifier may be generated 102. The cost function may comprise, for example, an error function with the error of A relative to B, where:

A is $F(\vec{x_J}) = \sum_i \alpha_i f_i(\vec{x_J})$, where $\vec{x_J}$ is a j-th set of data of a plurality of sets of input data, $f_i(\vec{x_J})$ is a classification of the j-th set of data of the plurality of sets of input data by the i-th classifier of the plurality of classifiers, and $\alpha_i$ is the weight value associated with the i-th classifier;
B is an actual class of the j-th set of data of the plurality of sets of input data; and
the error function being for all sets of data of the plurality of sets of input data or some sets of data of the plurality of sets of input data.

In a third step of the method 100, weight values of a boosted classifier are adjusted 103 for reducing a value of a cost function. By reducing the value of the cost function, an error among classifications of data calculated by the boosted classifiers and respective actual classifications of the data is reduced.

The third step of the method 100 comprises adjusting 1031, by at least one quantum computing device (for example, the at least one quantum computing device 22), states of qubits for reducing a value of the cost function.

Since the weight values are based on the adjusted states of qubits, the weight values can be adjusted by adjusting the states of qubits. Each weight value of the weight values may be based, for example, on states of several qubits.

The adjustment 1031 of states of qubits may be performed by using, for example, quantum annealing or variational quantum circuits. Next, an example using a particular quantum hardware and a particular algorithm for performing the adjustment 1031 of the states of qubits is described. However, the skilled person understands that quantum hardware different from the type described below may be used for performing the adjustment 1031 of the states of qubits (e.g., a quantum computer relying on superconductor technology). In addition, the skilled person understands that algorithms different from the algorithm described below may be used for performing the adjustment of the states of qubits. The weight values may be adjusted 103 by performing the following steps:

radiating a vacuum chamber comprising an ensemble of neutral atoms with a laser so as to trap atoms of the ensemble of neutral atoms in an array of optical tweezers, thereby providing a quantum register, and each optical tweezer comprising a single neutral atom;
digitally configuring at least one laser parameter for implementing one or more unitary operations for initializing states of the neutral atoms, wherein the one or more unitary operations are dependent at least upon the at least one laser parameter, and wherein the configuration of the at least one laser parameter is based on the received data;
radiating the ensemble of atoms with laser light so as to excite at least some atoms of the quantum register, with a laser being operated in accordance with the at least one laser parameter to implement one or more unitary operations;
reading the quantum register with optical means, thereby obtaining a string of bits based on an amount of light produced by the atoms, thus mapping binary values of the weight values of the plurality of classifiers to a state of qubits in the quantum register;
using the string of bits to compute the cost function;
updating, for reducing the cost function, the at least one laser parameter of the laser by an optimization algorithm until the weight values are adjusted (e.g., optimized at least to some extent) (e.g., by implementing a QAOA routine such the QAOA routine described in "A Quantum Approximate Optimization Algorithm; Edward Farhi, Jeffrey Goldstone, Sam Gutmann; arXiv: 1411.4028 (2014)");
digitally storing a result of the cost function as last computed; and
setting, by one or more computing devices, a boosted classifier based on the optimized weight values.

In a fourth step of the method 100 (the fourth step being optional), a value of the cost function for the adjusted weight values may be computed by at least one of: the at least one classical computing device 21 and the at least one quantum computing device 22. In the fourth step of the method 100 a value of a parameter related to the value of the cost function for the adjusted weight values may be computed by at least one of: the at least one classical computing device 21 and the at least one quantum computing device 22.

The value of the cost function for particular adjusted weight values is the value of the cost function of the boosted classifier wherein the weight values of the boosted classifier are the particular adjusted weight values.

In a fifth step of the method 100 (the fifth step being optional), the method 100 comprises determining 105 whether the computed value of the cost function (or the computed parameter related to the value of the cost function) fulfills a criterion of convergence of the cost function, and

if the computed value of the cost function (or the computed parameter related to the value of the cost function) does not fulfill the criterion of convergence of the cost function, the following steps are repeated until it is determined that the computed value of the cost function (or the computed parameter related to the value of the cost function) fulfills the criterion of convergence:

adjusting 103 the weight values (i.e., by adjusting 1031, by at least one quantum computing device, states of qubits for further reducing a value of a cost function of the boosted classifier, thereby obtaining later adjusted states of qubits) thereby obtaining later adjusted weight values, computing a later value of the cost function (or a later parameter related to the value of the cost function) for the later adjusted weight values (wherein the later adjusted weight values are based on the later adjusted states of qubits), and determining 105 whether the computed later value of the cost function (or the computed later parameter related to the value of the cost function) fulfills the criterion of convergence of the cost function;

if the computed value of the cost function (or the computed parameter related to the value of the cost function) fulfills the criterion of convergence of the cost function, the step of adjusting 103 the weight values is not performed. In addition, if the computed value of the cost function (or the computed parameter related to the value of the cost function) fulfills the criterion of convergence of the cost function, a boosted classifier comprising the adjusted weight values (i.e., the adjusted weight values for which the criterion of convergence is fulfilled by the computed value of the cost function or by the computed parameter related to the value of the cost function) may be set 106.

Thereby, the step of adjusting 103 the weight values may be repeated (i.e., repeated one or more times) for further reducing the value of the cost function. For example, the step of adjusting 103 the weight values may be repeated until one or more parameters related to the value of the cost function have attained a predetermined level of convergence. By way of example, said one or more parameters can be at least one of: the value of the cost function itself, a derivative of the value of the cost function, an analytic function of the value of the cost function and a derivative of an analytic function of the value of the cost function.

Thereby, the method 100 comprises adjusting the weight values several times so that the value of the cost function can be further reduced. The resulting value of the cost function for the adjusted weight values obtained in each iteration may be stored. In this way it may be assessed whether sufficient optimization has been achieved. In this sense, when at least two values have been stored, the method comprises checking whether the value of the cost function for the adjusted weight values meets a second predetermined criterion which is indicative of the degree of convergence attained by the cost function so far, i.e., whether the value of the cost function has converged to a sufficient extent according to a predetermined threshold or set of thresholds. Based on this assessment, the weight values are to be adjusted once again or, alternatively, it is deemed that the adjusted weight values optimize the cost function sufficiently.

The convergence can be established, for example, by computing a difference between the value (or a parameter thereof) of the cost function for adjusted weight values and the value (or a parameter thereof) of the cost function for previously adjusted weight values and comparing said difference with a predetermined threshold, or by computing a difference between the value (or the parameter thereof) of the cost function for adjusted weight values and the value (or the parameter thereof) of the cost function for weight values adjusted before having effected the N (with N equal to e.g. 50, 100, 500, etc.) most recent adjustment of weight values and comparing said difference with a predetermined threshold; when the difference does not exceed the predetermined threshold it is deemed that the value of the cost function (or the parameter thereof) has converged sufficiently.

Steps 103, 104 and 105 may be repeated until it is determined in step 105 that the computed value of the cost function (or the computed parameter related to the value of the cost function) fulfills the criterion of convergence of the cost function.

Data indicative of the weight values for which the criterion of convergence is fulfilled, may be stored in a memory and/or sent to at least one computing device (e.g., at least one classical computing device) for allowing execution of the boosted classifier by the at least one classical computing device.

In some embodiments, the boosted classifier is sent to at least one computing device (for example, to at least one classical computing device) for allowing execution of the boosted classifier by the at least one computing device.

In some embodiments, merely the adjusted weight values are sent to at least one computing device (for example, to at least one classical computing device), the at least one computing device having stored therein the plurality of classifiers. In this way, the amount of data sent to the at least one computing device is relatively lower since the plurality of classifiers are not sent to the at least one computing device. For example, the plurality of classifiers may have sent in a previous version of the boosted classifier and, since a newer version of the boosted classifier does not require updating the plurality of classifiers, the plurality of classifiers of the previous version of the boosted classifier may be reused.

In a seventh step of the method 100 (the seventh step being optional), the boosted classifier may be executed 107 by at least one classical computing device for classifying input data associated with at least one of: a network of computing devices, a computing device and a computing system; thereby respectively calculating whether:

- the data associated with a network of computing devices is indicative of an intrusion into the network of computing devices,
- the data associated with a computing device is indicative of an intrusion into the computing device, and
- the data associated with a computing system is indicative of an intrusion into the computing system.

Some examples of data indicative of an intrusion are:

- data indicative of an unauthorized access to at least one of the network of computing devices, the computing device and the computing system, and
- data indicative of a misuse of at least one of the network of computing devices, the computing device and the computing system.

In an eighth step of the method 100 (the eighth step being optional), upon calculating that data is indicative of an intrusion, at least one of the following is performed 108:

- generating a signal indicative of an intrusion,
- blocking traffic of a network of computing devices, the network being associated with the input data classified by the boosted classifier (for example, the input data being data transmitted through the network of computing devices), and
- disconnecting a computing device from a network to prevent that the intrusion into the computing device propagates through the network, the computing device being associated with the input data classified by the boosted classifier (for example, the input data being at least one of: data received by the computing device, transmitted by the computing device and processed by the computing device).

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the disclosure is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A method (100) comprising:

   adjusting (103) weight values of a boosted classifier, the boosted classifier being a classifier for calculating whether data is indicative of an intrusion into a computing entity;
   the boosted classifier comprising the weight values and a plurality of classifiers, each classifier of the plurality of classifiers being associated with a weight value of the weight values;
   the step of adjusting (103) the weight values comprising adjusting (1031), by at least one quantum computing device, states of qubits for reducing a value of a cost function of the boosted classifier;

   wherein the adjusted weight values are based on the adjusted states of qubits.

2. The method (100) of claim 1, the method comprising: training (101) each classifier of the plurality of classifiers before performing the step of adjusting (103) the weight values.

3. The method (100) of any one of the preceding claims, wherein the adjustment of the states of qubits is based on training data, the training data comprising sets of input data; each set of input data of the sets of input data being associated with output data indicative of whether the respective set of input data is indicative of an intrusion into a computing entity; each set of the sets of input data comprising at least one of: data indicative of a standard deviation of lengths of packets, data indicative of a total length of backward packets, data indicative of bytes of a backward subflow, data indicative of a destination port of packets and data indicative of a variance of lengths of packets.

4. The method (100) of any one of the preceding claims, wherein the cost function at least comprises an error function with the error of A relative to B, where:

   A is $F(\vec{x_j}) = \sum_i \alpha_i f_i(\vec{x_j})$, where $\vec{x_j}$ is a j-th set of data of a plurality of sets of input data; $f_i(\vec{x_j})$ is a classification, performed by the i-th classifier of the plurality of classifiers, of the j-th set of data of the plurality of sets of input data; and $\alpha_i$ is the weight value associated with the i-th classifier;
   B is an actual class of the j-th set of data of the plurality of sets of input data; and

the error function being for all sets of data of the plurality of sets of input data or some sets of data of the plurality of sets of input data.

5. The method (100) of any one of the preceding claims, the method comprising:

computing a value of the cost function for the adjusted weight values,
determining (105) whether the computed value of the cost function fulfills a criterion of convergence of the cost function, and
if the computed value of the cost function does not fulfill the criterion of convergence of the cost function, further performing the steps of:

adjusting (103) the weight values by adjusting (1031), by at least one quantum computing device, states of qubits for reducing a value of the cost function, thereby obtaining further adjusted weight values;
computing a value of the cost function for the further adjusted weight values, thereby obtaining a further computed value of the cost function; and
determining (105) whether the further computed value of the cost function fulfills the criterion of convergence of the cost function;

if the value of the cost function fulfills the criterion of convergence of the cost function, not performing the step of adjusting (103) the weight values.

6. The method (100) of claim 5, wherein the computation of a value of the cost function is performed digitally.

7. A boosted classifier comprising weight values and a plurality of classifiers, each classifier of the plurality of classifiers being associated with a weight value of the weight values, wherein the weight values have been adjusted by performing the method of any one of the preceding claims.

8. The boosted classifier of claim 7, the boosted classifier being a classifier for calculating whether data is indicative of an intrusion into at least one of: a network of computing devices, a computing device and a computing system.

9. The boosted classifier of claim 8, the boosted classifier being a classifier for calculating whether data is indicative of an intrusion involving at least one of:

unauthorized access to at least one of the network of computing devices, the computing device and the computing system, and

misuse of at least one of the network of computing devices, the computing device and the computing system.

10. The boosted classifier of claim 9, wherein the misuse of the network of computing devices comprises modifying a configuration of the network of computing devices.

11. Calculating (107) whether data is indicative of an intrusion into a computing entity by digitally executing the boosted classifier of any one of claims 7-10.

12. Calculating (107) whether data is indicative of an intrusion according to claim 11, and, upon calculating that data is indicative of an intrusion into a computing entity, performing at least one of:

- generating a signal indicative of an intrusion,
- blocking traffic of a network of computing devices, the network being associated with the data classified as indicative of an intrusion by the boosted classifier, and
- isolating a computing device, the computing device being associated with the data classified as indicative of an intrusion by the boosted classifier.

13. A computing system (20) or at least one computing device comprising means for carrying out the steps of the method of any one of claims 1-6.

**FIG. 1**

**FIG. 2**

Europäisches
Patentamt
European
Patent Office
Office européen
des brevets

# EUROPEAN SEARCH REPORT

**Application Number**

EP 23 38 2925

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 202 796 A1 (MULTIVERSE COMPUTING S.L. [ES]) 28 June 2023 (2023-06-28)<br>* figures 1-3 *<br>* paragraphs [0006] - [0050] *<br>* paragraphs [0054] - [0079] * | 1-13 | INV.<br>G06N10/60<br>G06N20/20<br><br>ADD.<br>G06F21/55 |
| X | US 2018/349605 A1 (MICROSOFT TECHNOLOGY LICENSING LLC [US]) 6 December 2018 (2018-12-06)<br>* paragraphs [0025] - [0028], [0039] *<br>* paragraphs [0149] - [0152]; figures 6, 7 * | 1-13 | |
| X | US 11 620 573 B1 (GOOGLE LLC [US]) 4 April 2023 (2023-04-04)<br>* figure 5 *<br>* column 5, line 27 - column 8, line 59 * | 1-13 | |
| X | G. MOHIUDDIN ET AL.: "Intrusion Detection using hybridized Meta-heuristic techniques with Weighted XGBoost Classifier", EXPERT SYSTEMS WITH APPLICATIONS, ELSEVIER, AMSTERDAM, NL, vol. 232, 5 June 2023 (2023-06-05), XP087377325, ISSN: 0957-4174, DOI: 10.1016/J.ESWA.2023.120596 [retrieved on 2023-06-05] | 7-12 | TECHNICAL FIELDS SEARCHED (IPC)<br><br>G06N<br>G06F |
| A | * sections 3.3 and 4.1 * | 1-6,13 | |

The present search report has been drawn up for all claims

| Place of search | Date of completion of the search | Examiner |
|---|---|---|
| The Hague | 6 March 2024 | Millet, Guillaume |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................

& : member of the same patent family, corresponding document

EPO FORM 1503 03.82 (P04C01)

**EP 4 524 829 A1**

## ANNEX TO THE EUROPEAN SEARCH REPORT
## ON EUROPEAN PATENT APPLICATION NO.

EP 23 38 2925

06-03-2024

| Patent document cited in search report | | Publication date | Patent family member(s) | | Publication date |
|---|---|---|---|---|---|
| EP 4202796 | A1 | 28-06-2023 | EP | 4202796 A1 | 28-06-2023 |
| | | | US | 2023196154 A1 | 22-06-2023 |
| US 2018349605 | A1 | 06-12-2018 | NONE | | |
| US 11620573 | B1 | 04-04-2023 | NONE | | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **EDWARD FARHI** ; **JEFFREY GOLDSTONE** ; **SAM GUTMANN**. A Quantum Approximate Optimization Algorithm. *arXiv: 1411.4028*, 2014